# EUROPEAN PATENT APPLICATION

(11) **EP 4 838 565 A1**
(43) Date of publication of application: **11.11.2026**
(21) Application number: 24916603.4
(22) Date of filing: 29.11.2024
(51) Int. Cl.: H01M 4/13, H01M 10/0587

(54) **BATTERY CELL, BATTERY, AND ELECTRICAL APPARATUS**

(30) Priority: 10.01.2024 CN 202410037817
(71) Applicant: Contemporary Amperex Technology Co., Limited, Ningde, Fujian 352100 (CN)
(72) Inventor: LUO, Zhongping, Ningde, Fujian 352100 (CN); LIN, Wenfa, Ningde, Fujian 352100 (CN); TANG, Minghao, Ningde, Fujian 352100 (CN); ZHANG, Shengwu, Ningde, Fujian 352100 (CN); DING, Yu, Ningde, Fujian 352100 (CN); KONG, Pan, Ningde, Fujian 352100 (CN); WEN, Yaoling, Ningde, Fujian 352100 (CN)
(74) Representative: Gong, Jinping
(86) International application number: PCT/CN2024/135839
(87) International publication number: WO 2025/148555

(57) **Abstract**

The present application is applicable to the technical field of batteries, and provides a battery cell (20), a battery (100), and an electrical apparatus. The battery cell (20) includes a positive electrode sheet (321), a negative electrode sheet (232), and a separator (233). The positive electrode sheet (321), the negative electrode sheet (232), and the separator (233) are stacked in a preset order and wound to form a wound body, and the positive electrode sheet (321), the negative electrode sheet (232), and the separator (233) respectively include a plurality of flat portions (234) and a plurality of curved portions (235) alternately connected. At least one surface of at least one of the curved portions (235) is coated with a discontinuously distributed coating (236). The battery cell (20), the battery (100), and the electrical apparatus provided by the present application can reduce the risk of phenomena such as electrode sheet breakage and lithium precipitation at a comer to some extent.

## Description

The present application claims priority to the Chinese Patent Application No. 202410037817.X filed with the China National Intellectual Property Administration on January 10, 2024 and entitled "BATTERY CELL, BATTERY, AND ELECTRIC APPARATUS", which is incorporated herein by reference in its entirety.

### TECHNICAL FIELD

The present application belongs to the field of battery technology, and in particular relates to a battery cell, a battery, and an electric apparatus.

### BACKGROUND

In charge-discharge cycles of a battery, ions are intercalated or deintercalated from a positive electrode active material and a negative electrode active material, and a battery cell swells due to thickness accumulation caused by side reactions in a battery cell system, peeling of a graphite layer, and the like. To be specific, a positive electrode sheet and a negative electrode sheet swell outward, so that phenomena such as electrode sheet breakage and lithium precipitation are likely to occur at corners of the battery cell.

### SUMMARY

Embodiments of the present application are intended to provide a battery cell, a battery, and an electric apparatus, aiming to alleviate the technical problems that phenomena such as electrode sheet breakage and lithium precipitation are likely to occur at corners of the battery cell.

### TECHNICAL SOLUTIONS

The technical solutions adopted in the embodiments of the present application are as follows.

According to a first aspect, an embodiment of the present application provides a battery cell, including a positive electrode sheet, a negative electrode sheet, and a separator. The positive electrode sheet, the negative electrode sheet, and the separator are stacked in a preset order and wound to form a wound body, and the positive electrode sheet, the negative electrode sheet, and the separator respectively include a plurality of flat portions and a plurality of curved portions alternately connected. At least one surface of at least one of the curved portions is coated with a discontinuously distributed coating.

By adopting the battery cell provided in this embodiment of the present application, in which at least one surface of at least one curved portion of at least one component among the positive electrode sheet, the negative electrode sheet, and the separator is coated with a discontinuously distributed coating, a spacing between the positive electrode sheet and the negative electrode sheet in at least one corner is increased, so that a required space is provided for swelling of the negative electrode sheet and the positive electrode sheet at the corner. This can reduce the stress of the battery cell at the corner to some extent, reducing the risk of adverse conditions such as electrolyte deficiency, electrode sheet breakage, deformation, wrinkling, black spots, and lithium precipitation of the battery cell at the corner to some extent, thereby prolonging the service life of the battery cell to some extent.

In addition, the coating used in the battery cell provided in this embodiment of the present application is discontinuously distributed. Thus, while the above effects are achieved, sufficient electrolyte transport channels can also be retained, thereby improving the cycling performance of the battery cell provided in this embodiment of the present application to some extent.

In some embodiments, a thickness of the coating is 5 µm to 100 µm. The coating is within the thickness range provided in these embodiments, so that the spacing between the positive electrode sheet and the negative electrode sheet at the corresponding corner is sufficiently large to reserve a large space for the swelling of the electrode sheets, and the risk of problems such as prolonged lithium ion transport distance and lithium precipitation at the corner caused by excessive spacing between the positive electrode sheet and the negative electrode sheet can be reduced to some extent.

In some embodiments, the thickness of the coating is 20 µm to 50 µm. The coating is within the thickness range provided in these embodiments, so that the spacing between the positive electrode sheet and the negative electrode sheet at the corresponding corner is sufficiently large to reserve a large space for the swelling of the electrode sheets, and the risk of problems such as prolonged lithium ion transport distance and lithium precipitation at the corner caused by excessive spacing between the positive electrode sheet and the negative electrode sheet can be reduced to some extent. In addition, a thickness difference of the coating in different regions is small, reducing the risk of tab misalignment to some extent.

In some embodiments, two of the curved portions located at the same turn are each provided with the coating. Generally, the structures at two ends of the wound body are substantially symmetrical, with substantially the same stress conditions. By adopting the structure provided in these embodiments, the spacing between the positive electrode sheet and the negative electrode sheet at the corners at two ends of the same turn can be enlarged, thereby improving the electrochemical performance of the battery cell in that turn.

In some embodiments, at the same turn, a coefficient of variation of a thickness of the coating is less than or equal to 15%.

The use of the solution provided in these embodiments allows for a small thickness fluctuation of the coating on the same curved portion, so that a position of a tab after winding is close to a designed position, thereby reducing the risk of tab misalignment to some extent.

In some embodiments, at the same turn, the coefficient of variation of the thickness of the coating is less than or equal to 10%. In some embodiments, from an inner turn to an outer turn, the thickness of the coating gradually increases, and a thickness change rate is less than or equal to 10%. Since a swelling force received by an outer turn layer is greater than that received by an inner turn layer, by adopting the coating provided in these embodiments, the spacing between the positive electrode sheet and the negative electrode sheet can be sequentially increased from inside to outside along a stacking direction of the battery cell, significantly reducing the swelling stresses of the inner, middle, and outer turn layers, thereby allowing for a small risk of breakage of the electrode sheet in each turn layer. The gradual increase in thickness of the coating not only can allow for a small risk of breakage of the electrode sheet in each turn layer, but also can reduce the risk of decrease in cell energy density caused by excessive thickness of the coating to some extent.

In some embodiments, from the inner turn to the outer turn, the thickness of the coating gradually increases, and the thickness change rate is less than or equal to 5%. By adopting the coating provided in these embodiments, the spacing between the positive electrode sheet and the negative electrode sheet can be sequentially increased from inside to outside along the stacking direction of the battery cell, significantly reducing the swelling stresses of the inner, middle, and outer turn layers, thereby allowing for a small risk of breakage of the electrode sheet in each turn layer. The gradual increase in thickness of the coating not only can allow for a small risk of breakage of the electrode sheet in each turn layer, but also can reduce the risk of decrease in cell energy density caused by excessive thickness of the coating to some extent.

In some embodiments, on at least one surface of at least one of the curved portions, a coverage rate of the coating is less than or equal to 60%, where the coverage rate is a percentage of an area sum of coating points of the coating to a total area of a distribution region of the coating. By adopting the solution provided in these embodiments, the lithium ion transport performance on a surface of the battery cell where the discontinuously distributed coating is located can meet the requirements, so that the dynamic performance of the battery cell meets the use requirements.

In some embodiments, on at least one surface of at least one of the curved portions, the coverage rate of the coating is less than or equal to 30%, where the coverage rate is the percentage of the area sum of coating points of the coating to the total area of the distribution region of the coating. By adopting the solution provided in these embodiments, the coating can cover only a small region of the corresponding curved portion, which enables the lithium ion transport performance of the surface where the discontinuously distributed coating in the battery cell is located to meet the requirements, so that the dynamic performance of the battery cell meets the use requirements.

In some embodiments, on at least one surface of at least one of the curved portions, the coating is arranged in an array or arranged irregularly. The array arrangement of the coating on at least one surface of at least one curved portion facilitates design. The irregular arrangement of the coating on at least one surface of at least one curved portion facilitates preparation.

In some embodiments, the coating includes separate bodies distributed at intervals, and the separate body has one or more of a regular linear shape, an irregular linear shape, a regular dotted shape, and an irregular dotted shape. The use of the solution provided in these embodiments allows for a small size of a single separate body and a small coverage region, so that the adverse impact on the performance of the battery cell is small.

In some embodiments, when the separate body has a regular linear shape or an irregular linear shape, a width of the separate body is less than or equal to 2 mm, and a line length is not limited. The use of the solution provided in these embodiments allows for a small size of a single separate body and a small coverage region, so that the adverse impact on the performance of the battery cell is small.

In some embodiments, when the separate body has a regular dotted shape or an irregular dotted shape, a maximum size of the separate body is greater than 0 mm and less than or equal to 2 mm. The use of the solution provided in these embodiments allows for a small size of a single separate body and a small coverage region, so that the adverse impact on the performance of the battery cell is small.

In some embodiments, a spacing between outer contours of adjacent separate bodies is 0.01 mm to 5 mm. The spacing between two adjacent separate bodies is within the range provided in these embodiments, so that the spacing between two adjacent separate bodies is greater than the size of a single separate body, allowing for a small coverage rate of the coating. This enables the lithium ion transport performance of the surface where the discontinuously distributed coating in the battery cell is located to meet the requirements, so that the dynamic performance of the battery cell meets the use requirements.

In some embodiments, along the stacking direction of the battery cell, a plurality of coatings are provided, and a thickness of each coating gradually increases from inside to outside. Since the swelling force received by an outer turn layer is greater than that received by an inner turn layer, by adopting the coating of the patent, the spacing between the positive electrode sheet and the negative electrode sheet can be sequentially increased from inside to outside along the stacking direction of the battery cell, significantly reducing the swelling stresses of the inner, middle, and outer turn layers, thereby allowing for a small risk of breakage of the electrode sheet in each turn layer.

In some embodiments, at least one surface of each of the curved portions in the positive electrode sheet is provided with the coating; and/or, at least one surface of each of the curved portions in the negative electrode sheet is provided with the coating; and/or, at least one surface of each of the curved portions in the separator is provided with the coating. The battery cell is a wound body, the wound body is a multi-turn structure, and each turn has curved portions, posing the risks of large stress, electrode sheet breakage, and the like. Therefore, by adopting the solution provided in these embodiments, the spacing between the positive electrode sheet and the negative electrode sheet at any corner can be increased, thereby reducing the risk of problems such as electrode sheet breakage at each corner.

In some embodiments, a thickness compression rate of the coating under a first compression condition is less than or equal to 30%, where the first compression condition includes a pressure value of 0.15 Mpa to 0.25 Mpa and a compression duration of 100s to 140s. The first compression condition is substantially the same as a compression condition for the coating during a winding process. By adopting the solution provided in these embodiments, the coating is not excessively compressed after the battery cell is wound and formed, and can retain a large thickness, thereby providing good isolation between the positive electrode sheet and the negative electrode sheet in a corresponding region and meeting the use requirements.

In some embodiments, the first compression condition includes a pressure value of 0.2 Mpa and a compression duration of 120s. The first compression condition adopting the values provided in these embodiments facilitates design and is similar to the compression condition for the coating during the winding process, allowing for a good winding effect after coating preparation. In some embodiments, a thickness compression rate of the coating under a second compression condition is greater than or equal to 60%, where the second compression condition includes a pressure value of 2.5 Mpa to 3.5 Mp and a compression duration of 100s to 140s. The second compression condition is substantially the same as a squeezing condition for the swelling force received by the coating when the battery cell is in use. The coating can be compressed to a large extent after receiving the swelling force, so that a large space is released to reduce the stress on the electrode sheet, thereby reducing the risk of problems such as electrode sheet breakage.

In some embodiments, the second compression condition includes a pressure value of 3 Mpa and a compression duration of 120s. The second compression condition adopting the values provided in these embodiments facilitates design and is similar to the compression condition for the coating during use, reducing the risk of problems such as electrode sheet breakage to some extent. In some embodiments, the coating includes a polymer. The polymer is a film-forming material for the coating. The coating adopting a polymer has a stable structure and facilitates preparation.

In some embodiments, the polymer includes at least one of polytetrafluoroethylene, polyvinyl alcohol, polyvinyl acetate, polyacrylamide, phenolic resin, epoxy resin, polyurethane, polyvinylpyrrolidone, polyethylene oxide, poly(vinylidene fluoride), polyacrylonitrile, polyimide, polyacrylate, polydimethylsiloxane, polystyrene, polyethylene, polypropylene, polyacrylate salt, polyacrylic acid, polybutadiene, carboxymethylcellulose sodium, and derivatives thereof. The material of the coating has a stable structure, facilitating material selection and preparation.

In some embodiments, the coating further includes an auxiliary binder. The auxiliary binder plays a role in auxiliary binding to further improve the binding performance of the discontinuously distributed coating.

In some embodiments, a monomer of the auxiliary binder includes at least one of ethyl acrylate, butyl acrylate, ethyl methacrylate, styrene, chlorostyrene, fluorostyrene, methylstyrene, acrylic acid, methacrylic acid, maleic acid, acrylonitrile, and butadiene. The auxiliary binder made of the material provided in these embodiments has a stable structure and good binding effect.

In some embodiments, the coating further includes a wetting agent. The wetting agent is used to reduce the surface energy of a slurry and enhance the affinity between the slurry and a substrate.

In some embodiments, the wetting agent includes at least one of dimethylsiloxane, polyethylene oxide, oxyethylene alkyl phenol ether, polyoxyethylene fatty alcohol ether, polyoxyethylene polyoxypropylene block copolymer, and sodium dioctyl sulfosuccinate. The wetting agent made of the material provided in these embodiments has a stable structure and good wetting effect.

According to a second aspect, an embodiment of the present application provides a battery, including the battery cell provided in any of the above embodiments, or including the battery cell provided in any of the above embodiments. The battery provided in this embodiment of the present application includes the battery cell of any of the above solutions, or includes the battery cell of any of the above solutions, increasing the spacing between the positive electrode sheet and the negative electrode sheet in at least one corner, so that a required space is provided for the swelling of the negative electrode sheet and the positive electrode sheet at the corner. This can reduce the stress of the battery cell at the corner to some extent, reducing the risk of adverse conditions such as electrolyte deficiency, electrode sheet breakage, deformation, wrinkling, black spots, and lithium precipitation of the battery cell at the corner to some extent, thereby prolonging the service life of the battery cell to some extent.

According to a third aspect, an embodiment of the present application provides an electric apparatus, including the battery provided in any of the above embodiments. The electric apparatus provided in this embodiment of the present application includes the battery of any of the above solutions, increasing the spacing between the positive electrode sheet and the negative electrode sheet in at least one corner, so that a required space is provided for the swelling of the negative electrode sheet and the positive electrode sheet at the corner. This can reduce the stress of the battery cell at the corner to some extent, reducing the risk of adverse conditions such as electrolyte deficiency, electrode sheet breakage, deformation, wrinkling, black spots, and lithium precipitation of the battery cell at the corner to some extent, thereby prolonging the service life of the battery cell to some extent.

The above description is only an overview of the technical solutions of the present application. In order to more clearly understand the technical means of the present application so that it can be implemented according to the content of the specification, and in order to make the above and other purposes, features, and advantages of the present application more obvious and understandable, specific embodiments of the present application are listed below.

### BRIEF DESCRIPTION OF DRAWINGS

In order to more clearly illustrate the technical solutions in the embodiments of the present application, the drawings needed in the embodiments or exemplary technical descriptions will be briefly introduced below. Obviously, the drawings described below are only some embodiments of the present application. For those of ordinary skill in the art, other drawings can still be obtained based on these drawings without creative efforts.
FIG. 1 is a schematic structural diagram of a vehicle according to some embodiments of the present application;
FIG. 2 is a schematic structural exploded view of a battery according to some embodiments of the present application;
FIG. 3 is a schematic structural exploded view of a battery cell according to some embodiments of the present application;
FIG. 4 is a schematic structural cross-sectional view of an electrode assembly in a battery cell according to some embodiments of the present application;
FIG. 5 is a schematic structural diagram of an electrode sheet at an innermost turn in a battery cell according to some embodiments of the present application;
FIG. 6 is a schematic structural cross-sectional view of a positive electrode sheet at each turn in a battery cell according to some embodiments of the present application;
FIG. 7 is a schematic structural cross-sectional view of a coating in a battery cell according to some embodiments of the present application;
FIG. 8 is a schematic structural cross-sectional view of a positive electrode sheet at each turn in a battery cell according to some other embodiments of the present application;
FIG. 9 is a schematic structural cross-sectional view of a positive electrode sheet at each turn in a battery cell according to still some other embodiments of the present application;
FIG. 10 is a schematic structural cross-sectional view of an electrode assembly in a battery cell according to some other embodiments of the present application; and
FIG. 11 is a schematic structural cross-sectional view of a partial structure of a battery cell according to some other embodiments of the present application.

The reference numerals of the drawings in the specific embodiments are as follows:
1000. vehicle;
100. battery. 200. controller. 300. motor;
10. box. 11. first portion. 12. second portion;
20. battery cell. 21. end cover. 21a. electrode terminal. 22. housing. 23. electrode assembly. 23a. tab; 24. coating;
231. positive electrode sheet. 232. negative electrode sheet. 233. separator. 234. flat portion. 235. curved portion. 236. coating. 236a. separate body. 237. electrode sheet at innermost turn. 238. first sheet body;
d. thickness of coating. a. dimension of separate body in at least one direction; and b. spacing between two adjacent separate bodies.

### DESCRIPTION OF EMBODIMENTS

The embodiments of the technical solutions of the present application are described in detail below in conjunction with the drawings. The following embodiments are only used to more clearly illustrate the technical solutions of the present application, and therefore are only examples and cannot be used to limit the protection scope of the present application.

Unless otherwise defined, all technical and scientific terms used herein have the same meaning as commonly understood by those skilled in the technical field to which the present application belongs; the terms used herein are only for the purpose of describing specific embodiments and are not intended to limit the present application; and the terms "include", "comprise", as well as any variations thereof in the specification and claims of the present application and the above drawings are intended to cover non-exclusive inclusion.

In the description of the embodiments of the present application, the technical terms "first", "second", and the like are only used to distinguish different objects, and cannot be understood as indicating or implying relative importance or implicitly indicating the number, specific order, or primary-secondary relationship of the indicated technical features. In the description of the embodiments of the present application, "a plurality of" means two or more, unless otherwise explicitly and specifically defined.

Reference to "embodiment" herein means that a particular feature, structure, or characteristic described in connection with the embodiment may be included in at least one embodiment of the present application. The appearance of this phrase in various places in the specification does not necessarily refer to the same embodiment, nor is it an independent or alternative embodiment mutually exclusive with other embodiments. Those skilled in the art explicitly and implicitly understand that the embodiments described herein can be combined with other embodiments.

In the description of the embodiments of the present application, the term "and/or" is merely a descriptive relationship of associated objects, indicating that three relationships may exist. For example, A and/or B may indicate: only A is present, both A and B are present, and only B is present. In addition, the character "/" herein generally indicates that the contextually associated objects are in an "or" relationship.

In the description of the embodiments of the present application, the term "a plurality of" means more than two (including two). Similarly, "a plurality of groups" means more than two groups (including two groups), and "a plurality of pieces" means more than two pieces (including two pieces).

In the description of the embodiments of the present application, the orientation or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientation or positional relationships shown in the drawings, and are only for the convenience of describing the embodiments of the present application and simplifying the description, and do not indicate or imply that the referred apparatus or element must have a specific orientation and be constructed and operated in a specific orientation, and therefore cannot be understood as limiting the embodiments of the present application.

In the description of the embodiments of the present application, unless otherwise explicitly specified and limited, the technical terms "mounting", "connection", "join", "fastening", and the like should be understood in a broad sense. For example, it may be a fixed connection, detachable connection, or integral connection; it may be a mechanical connection or electrical connection; it may be a direct connection or indirect connection through an intermediate medium; and it may be an internal connection of two elements or interaction relationship of two elements. For those of ordinary skill in the art, the specific meanings of the above terms in the embodiments of the present application can be understood according to specific situations.

At present, from the development of market situations, the application of traction batteries is becoming more and more extensive. Traction batteries are not only applied in energy storage power systems such as hydraulic, thermal, wind, and solar power stations, but also widely applied in electric transportation tools such as electric bicycles, electric motorcycles, and electric vehicles, as well as in various fields such as military equipment and aerospace. With the continuous expansion of the application fields of traction batteries, their market demand is also constantly increasing.

Electrode assembly is an important component of a battery. According to preparation methods, electrode assemblies may be divided into wound electrode assemblies and stacked electrode assemblies, where wound electrode assemblies are widely used due to relatively simple operation and easy quality control.

A wound electrode assembly generally includes a negative electrode sheet, a positive electrode sheet, and a separator arranged in a preset order. The positive electrode sheet and the negative electrode sheet generally each include a current collector and an active material layer applied on the current collector. The wound electrode assembly may be a square structure or a cylindrical structure, where square wound electrode assemblies are widely used due to their advantages such as good heat dissipation and good safety.

In charge-discharge cycles of a battery, ions are intercalated or deintercalated from a positive electrode active material and a negative electrode active material, and a battery cell swells due to thickness accumulation caused by side reactions in a battery cell system, peeling of a graphite layer, and the like. To be specific, a positive electrode sheet and a negative electrode sheet swell outward. Electrode sheet swelling has adverse effects on the performance and service life of the battery. For example, squeezing caused by stress may reduce the porosity of the electrode sheet and thus affects the infiltration to the electrode sheet by the electrolyte, causing changes in ion transport path and bringing a problem of lithium precipitation. After bearing a large squeezing force for a long time, the electrode sheet may be broken and thus poses a risk of internal short circuits in the battery, and the like. Especially at a corner of the battery cell, stress generated by electrode sheet swelling is greater, so that phenomena such as electrolyte deficiency and lithium precipitation are more likely to occur there, thereby causing battery performance degradation, and even causing safety problems in severe cases.

To alleviate the above problems, an embodiment of the present application provides a battery cell. The battery cell has a discontinuously distributed coating applied on at least one surface of at least one curved portion of at least one component among a positive electrode sheet, a negative electrode sheet, and a separator, increasing a spacing between the positive electrode sheet and the negative electrode sheet in at least one corner, so that a required space is provided for the swelling of the negative electrode sheet and the positive electrode sheet at the corner. This can reduce the stress of the battery cell at the corner to some extent, reducing the risk of adverse conditions such as electrolyte deficiency, electrode sheet breakage, deformation, wrinkling, black spots, and lithium precipitation of the battery cell at the corner to some extent, thereby prolonging the service life of the battery cell to some extent.

The battery cell disclosed in this embodiment of the present application can be used in batteries, electric apparatuses using batteries as power sources, or various energy storage systems using batteries as energy storage elements. The electric apparatus may be but is not limited to mobile phones, tablets, laptops, electric toys, electric tools, battery cars, electric vehicles, ships, and spacecraft. Electric toys may include fixed or mobile electric toys, such as game consoles, electric toy cars, electric toy ships, and electric toy airplanes, and spacecraft may include airplanes, rockets, space shuttles, spaceships, and the like.

For convenience of explanation, an example in which an electric apparatus is a vehicle 1000 according to one embodiment of the present application is used for description in the following embodiments.

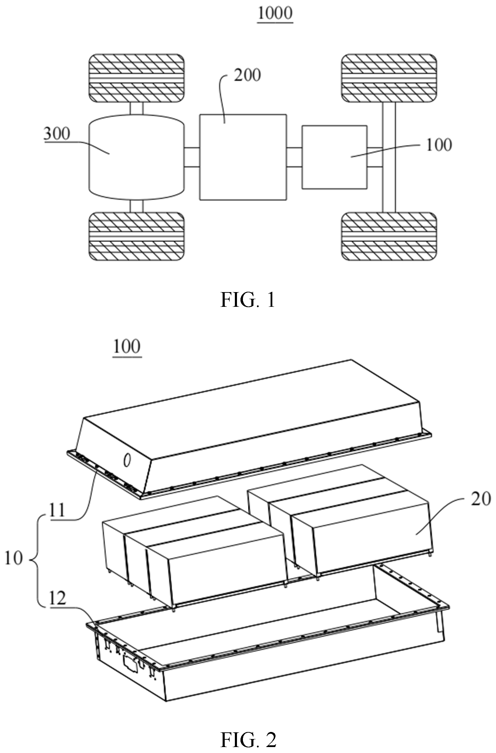

Referring to FIG. 1, FIG. 1 is a schematic structural diagram of a vehicle 1000 according to some embodiments of the present application. The vehicle 1000 may be a fuel vehicle, a gas vehicle, or a new energy vehicle, and the new energy vehicle may be a battery electric vehicle, a hybrid vehicle, an extended-range vehicle, or the like. The vehicle 1000 is provided with a battery 100 inside, and the battery 100 may be provided at the bottom, front, or rear of the vehicle 1000. The battery 100 may be used for power supply of the vehicle 1000. For example, the battery 100 may serve as an operating power source of the vehicle 1000. The vehicle 1000 may further include a controller 200 and a motor 300, and the controller 200 is configured to control the battery 100 to supply power to the motor 300, for example, for the operating power demand during starting, navigation, and driving of the vehicle 1000.

In some embodiments of the present application, the battery 100 can not only serve as an operating power source of the vehicle 1000, but also serve as a driving power source of the vehicle 1000, replacing or partially replacing fuel or natural gas to provide driving power for the vehicle 1000.

Referring to FIG. 2, FIG. 2 is an exploded view of a battery 100 according to some embodiments of the present application. The battery 100 includes a box 10 and a battery cell 20, where the battery cell 20 is accommodated in the box 10. The box 10 is configured to provide an accommodation space for the battery cell 20, and the box 10 may adopt various structures. In some embodiments, the box 10 may include a first portion 11 and a second portion 12. The first portion 11 and the second portion 12 cover each other, and the first portion 11 and the second portion 12 jointly define an accommodation space for accommodating the battery cell 20. The second portion 12 may be a hollow structure with one end open, the first portion 11 may be a plate-shaped structure, and the first portion 11 covers the open side of the second portion 12, so that the first portion 11 and the second portion 12 jointly define the accommodation space. The first portion 11 and the second portion 12 may alternatively each be a hollow structure with one side open, and the open side of the first portion 11 covers the open side of the second portion 12. Certainly, the box 10 formed by the first portion 11 and the second portion 12 may be of various shapes, such as a cylinder and a cuboid. In some cases, the battery cell may alternatively be directly mounted in a vehicle without a box or housing, that is, without forming a battery pack, and the structure of the vehicle body serves as a fixing structure for the battery cell.

In the battery 100, there may be a plurality of battery cells 20, and the plurality of battery cells 20 may be connected in series, in parallel, or in series-parallel, where being connected in series-parallel means that there is both a series connection and a parallel connection between the plurality of battery cells 20. The plurality of battery cells 20 may be directly connected in series, in parallel, or in series-parallel, and then an entirety formed by the plurality of battery cells 20 is accommodated in the box 10. Certainly, the battery 100 may alternatively be formed in a manner that a plurality of battery cells 20 are first connected in series, in parallel, or in series-parallel to form battery modules, and then a plurality of battery modules are connected in series, in parallel, or in series-parallel to form an entirety that is accommodated in the box 10. The battery 100 may further include other structures. For example, the battery 100 may further include a bus component for achieving electrical connection between the plurality of battery cells 20.

Each battery cell 20 may be a secondary battery or a primary battery, and may alternatively be a lithium-sulfur battery, a sodium-ion battery, or a magnesium-ion battery, but is not limited thereto. The battery cell 20 may be cylindrical, flat, cuboid, or of other shapes.

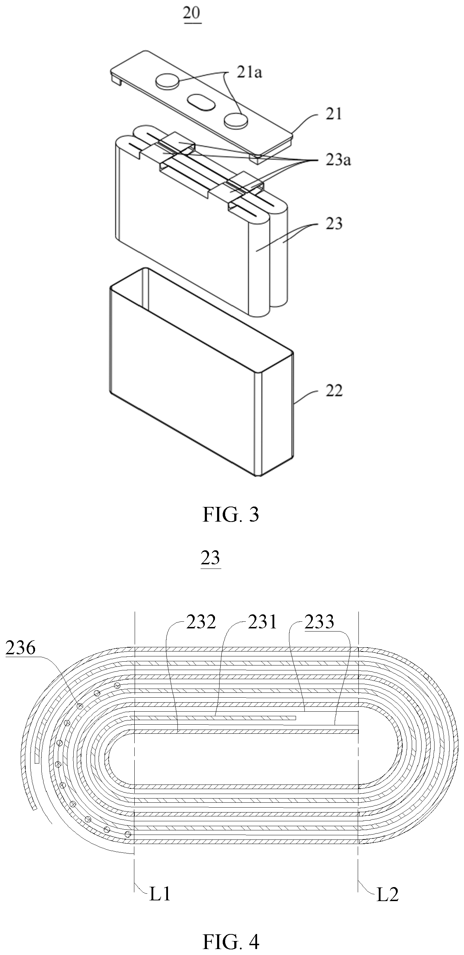

Referring to FIG. 3, FIG. 3 is a schematic structural exploded view of a battery cell 20 according to some embodiments of the present application. The battery cell 20 refers to the smallest unit constituting a battery. As shown in FIG. 3, the battery cell 20 includes an end cover 21, a housing 22, an electrode assembly 23, and other functional components.

The end cover 21 refers to a component that covers an opening of the housing 22 to isolate the internal environment of the battery cell 20 from the external environment. Without limitation, the shape of the end cover 21 may be adapted to the shape of the housing 22 to fit the housing 22. Optionally, the end cover 21 may be made of a material with specific hardness and strength (such as aluminum alloy), so that the end cover 21 is not prone to deformation when subjected to squeezing and collision, enabling the battery cell 20 to have higher structural strength and improved safety performance. Functional components such as an electrode terminal 21a may be provided on the end cover 21. The electrode terminal 21a may be configured to be electrically connected to an electrode assembly 23 to output or input electrical energy of the battery cell 20. In some embodiments, a pressure relief mechanism for relieving internal pressure when the internal pressure or temperature of the battery cell 20 reaches a threshold may also be provided on the end cover 21. The end cover 21 may also be made of various materials, such as copper, iron, aluminum, stainless steel, aluminum alloy, and plastic. This is not particularly limited in the embodiments of the present application. In some embodiments, an insulating member may be provided on an inner side of the end cover 21, and the insulating member may be configured to isolate electrically connected components in the housing 22 from the end cover 21 to reduce the risk of short circuits. Exemplarily, the insulating member may be made of plastic, rubber, or the like.

The housing 22 may be a component that fits with the end cover 21 to form the internal environment of the battery cell 20, where the formed internal environment may be used to accommodate an electrode assembly 23, an electrolyte, and other components. The housing 22 and the end cover 21 may be independent components, an opening may be provided on the housing 22, and at the opening, the end cover 21 covers the opening to form the internal environment of the battery cell 20. Without limitation, the end cover 21 and the housing 22 may alternatively be integrated. Specifically, the end cover 21 and the housing 22 may first form a common connection surface before other components are placed in the housing, and when it is necessary to seal the interior of the housing 22, the end cover 21 covers the housing 22. The housing 22 may be of various shapes and various sizes, such as cuboid, cylinder, and hexagonal prism. Specifically, the shape of the housing 22 may be determined according to a specific shape and size of the electrode assembly 23. The housing 22 may be made of various materials, such as copper, iron, aluminum, stainless steel, aluminum alloy, and plastic. This is not particularly limited in the embodiments of the present application.

The electrode assembly 23 is a component in the battery cell 100 where electrochemical reactions take place. The housing 22 may contain one or more electrode assemblies 23 inside. The electrode assembly 23 is mainly formed by winding a positive electrode sheet and a negative electrode sheet, and usually a separator is provided between the positive electrode sheet and the negative electrode sheet. Portions of the positive electrode sheet and the negative electrode sheet with an active material constitute a main body of the electrode assembly, and portions of the positive electrode sheet and the negative electrode sheet without an active material respectively constitute tabs 23a. A positive electrode tab and a negative electrode tab may be located together at one end of the main body or respectively at two ends of the main body. During a charge-discharge process of the battery, a positive electrode active material and a negative electrode active material react with an electrolyte, and the tabs 23a are connected to the electrode terminals to form a current loop.

As shown in FIG. 4, an embodiment of the present application provides a battery cell. The battery cell includes a positive electrode sheet 231, a negative electrode sheet 232, and a separator 233. The positive electrode sheet 231, the negative electrode sheet 232, and the separator 233 are stacked in a preset order and wound to form a wound body. The positive electrode sheet 231, the negative electrode sheet 232, and the separator 233 respectively include a plurality of flat portions 234 and a plurality of curved portions 235 alternately connected. At least one surface of at least one curved portion 235 is coated with a discontinuously distributed coating 236.

The battery cell in this embodiment includes a square wound electrode assembly. The battery cell may include one positive electrode sheet 231 and one negative electrode sheet 232, or include a plurality of positive electrode sheets 231 and a plurality of negative electrode sheets 232, with a separator 233 provided between any two electrode sheets. In an embodiment where the battery cell includes one positive electrode sheet 231 and one negative electrode sheet 232, the negative electrode sheet 232, the separator 233, and the positive electrode sheet 231 are generally sequentially stacked in a preset order of positive electrode sheet 231, separator 233, negative electrode sheet 232, and separator 233, or a preset order of negative electrode sheet 232, separator 233, positive electrode sheet 231, and separator 233. In an embodiment where the wound battery cell includes a plurality of negative electrode sheets 232 and a plurality of positive electrode sheets 231, a stacking principle of the negative electrode sheets 232, the separators 233, and the positive electrode sheets 231 is substantially the same as that of the above embodiment. Details are not described herein again.

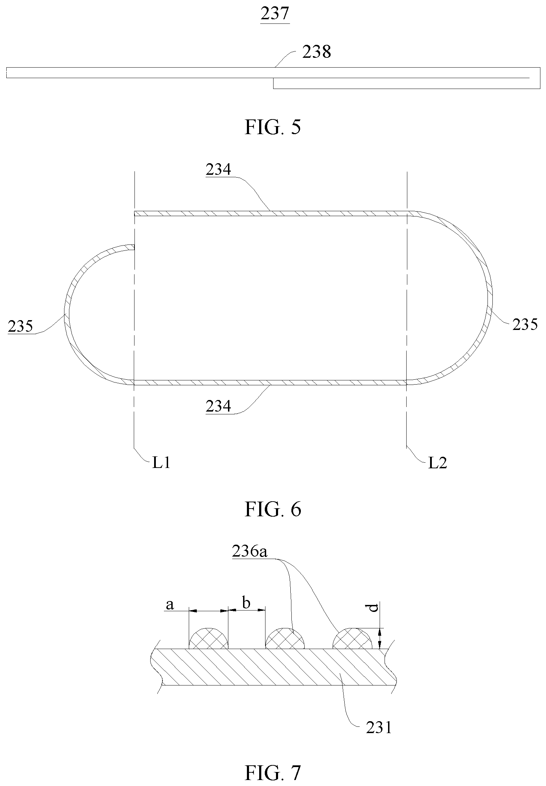

The wound body refers to a flat multi-turn wound body formed by winding the positive electrode sheet 231, the negative electrode sheet 232, and the separator 233 that are stacked in a preset order. Winding formation refers to a process in which the separator 233 and at least two electrode sheets stacked in a preset order are wound around a virtual axis, and then hot-pressed or cold-pressed to form a flat wound body. The flat wound body is a multi-turn wound structure. As shown in FIG. 5, the electrode sheet 237 at the innermost turn includes two interconnected and oppositely arranged sheet bodies, and the longer one of the two sheet bodies is recorded as the first sheet body 238. For example, except for the electrode sheet at the innermost turn, as shown in FIG. 6, the electrode sheet at each turn of the flat wound body includes two oppositely arranged flat portions 234 and two curved portions 235 connecting the two adjacent flat portions 234. It should be noted that, in the electrode sheet located at the same turn, one curved portion 235 is configured to connect the two flat portions 234 in the electrode sheet at this turn, such as the curved portion 235 located on the left in FIG. 6. The other curved portion 235 is configured to connect one flat portion 234 in the electrode sheet at this turn and one flat portion 234 in the electrode sheet at another turn, such as the curved portion 235 located on the right in FIG. 6.

For convenience of definition, a portion corresponding to the position of the first sheet body 238 and having a length equivalent to a length of the first sheet body 238 in the electrode sheet at each turn can be defined as the flat portion 234, and a portion connecting two adjacent flat portions 234 can be defined as the curved portion 235. For ease of understanding, as shown in FIG. 4 and FIG. 6, a portion located between a first reference line L1 and a second reference line L2 is the flat portion 234, a portion located on the left of the first reference line L1 is the curved portion 235, and a portion located on the right of the second reference line L2 is the curved portion 235.

Since the positive electrode sheet 231, the negative electrode sheet 232, and the separator 233 are each a sheet body, with a dimension in the thickness direction being much smaller than dimensions in the length direction and the width direction. The at least one surface of the above at least one curved portion 235 refers to at least one of the two surfaces (that are, an inner surface and an outer surface) oppositely arranged in the thickness direction of the curved portion 235.

The discontinuously distributed coating 236 means that there are a plurality of coatings 236 provided on one surface, and the plurality of coatings 236 are arranged at intervals on the corresponding surface.

The at least one surface of at least one curved portion 235 being coated with a discontinuously distributed coating 236 means that the discontinuously distributed coating 236 is applied on at least one surface of at least one curved portion 235 of at least one component among the positive electrode sheet 231, the negative electrode sheet 232, and the separator 233, including but not limited to the following cases: first, a discontinuously distributed coating 236 is applied on at least one surface of at least one curved portion 235 of the positive electrode sheet 231; second, a discontinuously distributed coating 236 is applied on at least one surface of at least one curved portion 235 of the negative electrode sheet 232; third, a discontinuously distributed coating 236 is applied on at least one surface of at least one curved portion 235 of the separator 233; fourth, a discontinuously distributed coating 236 is applied on at least one surface of at least one curved portion 235 of the positive electrode sheet 231, and a discontinuously distributed coating 236 is applied on at least one surface of at least one curved portion 235 of the negative electrode sheet 232; fifth, a discontinuously distributed coating 236 is applied on at least one surface of at least one curved portion 235 of the positive electrode sheet 231, and a discontinuously distributed coating 236 is applied on at least one surface of at least one curved portion 235 of the separator 233; sixth, a discontinuously distributed coating 236 is applied on at least one surface of at least one curved portion 235 of the negative electrode sheet 232, and a discontinuously distributed coating 236 is applied on at least one surface of at least one curved portion 235 of the separator 233; and seventh, a discontinuously distributed coating 236 is applied on at least one surface of at least one curved portion 235 of the positive electrode sheet 231, a discontinuously distributed coating 236 is applied on at least one surface of at least one curved portion 235 of the negative electrode sheet 232, and a discontinuously distributed coating 236 is applied on at least one surface of at least one curved portion 235 of the separator 233.

By adopting the battery cell provided in this embodiment of the present application, in which the discontinuously distributed coating 236 is applied on at least one surface of at least one curved portion 235 of at least one component among the positive electrode sheet 231, the negative electrode sheet 232, and the separator 233, a spacing between the positive electrode sheet 231 and the negative electrode sheet 232 in at least one corner is increased, so that a required space is provided for the swelling of the negative electrode sheet 232 and the positive electrode sheet 231 at the corner. This can reduce the stress of the battery cell at the corner to some extent, reducing the risk of adverse conditions such as electrolyte deficiency, electrode sheet breakage, deformation, wrinkling, black spots, and lithium precipitation of the battery cell at the corner to some extent, thereby prolonging the service life of the battery cell to some extent.

In addition, the coating 236 used in the battery cell provided in this embodiment of the present application is discontinuously distributed. Thus, while the above effects are achieved, sufficient electrolyte channels, thereby improving the cycling performance of the battery cell provided in this embodiment of the present application to some extent.

As shown in FIG. 7, in some embodiments, a thickness d of the coating 236 is 5 µm to 100 µm.

Exemplarily, the thickness d of the coating 236 may be typical but non-limiting values such as 5 µm, 6 µm, 10 µm, 25 µm, 30 µm, 35 µm, 40 µm, 45 µm, 50 µm, 60 µm, 75 µm, and 90 µm.

The coating 236 within the thickness range provided in these embodiments can make the spacing between the positive electrode sheet 231 and the negative electrode sheet 232 at the corresponding corner sufficiently large to reserve a large space for the swelling of the electrode sheet, and can also reduce, to some extent, the risk of problems such as prolonged lithium ion transport distance and lithium precipitation at the corner caused by excessive spacing between the positive electrode sheet 231 and the negative electrode sheet 232.

In some embodiments, the thickness d of the coating 236 is 20 µm to 50 µm.

Exemplarily, the thickness d of the coating 236 may be typical but non-limiting values such as 20 µm, 25 µm, 28 µm, 30 µm, 32 µm, 35 µm, 40 µm, 42 µm, 45 µm, 48 µm, and 50 µm.

The coating 236 within the thickness range provided in these embodiments can make the spacing between the positive electrode sheet 231 and the negative electrode sheet 232 at the corresponding corner sufficiently large to reserve a large space for the swelling of the electrode sheet, and can also reduce, to some extent, the risk of problems such as prolonged lithium ion transport distance and lithium precipitation at the corner caused by excessive spacing between the positive electrode sheet 231 and the negative electrode sheet 232. In addition, a small thickness difference of the coating 236 in different regions can be achieved, thereby reducing the risk of misalignment of the tab 23a to some extent.

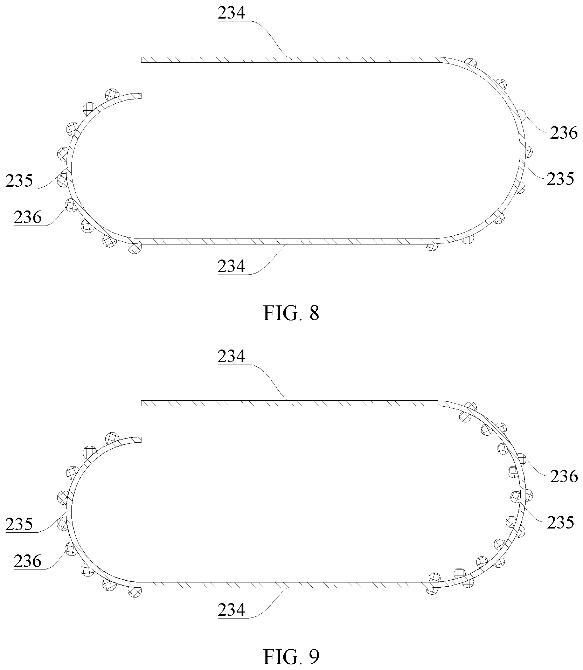

As shown in FIG. 8 and FIG. 9, in some embodiments, the coating 236 is provided on both the two curved portions 235 located at the same turn.

As mentioned above, the wound body is generally a multi-turn structure, where two flat portions 234 and two curved portions 235 sequentially connected end to end form one turn of structure. It can be understood that this one turn of structure may be one turn of separator 233 structure formed by two flat portions 234 and two curved portions 235 sequentially connected end to end in the separator 233, or one turn of positive electrode sheet 231 structure formed by two flat portions 234 and two curved portions 235 sequentially connected end to end in the positive electrode sheet 231, or one turn of negative electrode sheet 232 structure formed by two flat portions 234 and two curved portions 235 sequentially connected end to end in the negative electrode sheet 232.

The two curved portions 235 located at the same turn refer to two curved portions 235 in at least one turn.

Generally, the structures at two ends of the wound body are substantially symmetrical, with substantially the same stress conditions. By adopting the structure provided in these embodiments, the spacing between the positive electrode sheet 231 and the negative electrode sheet 232 at the corners at two ends of the same turn can be enlarged, thereby improving the electrochemical performance of the battery cell in that turn.

In some embodiments, at the same turn, a coefficient of variation of a thickness of the coating 236 is less than or equal to 15%.

The coefficient of variation (Coefficient of Variation, CV) is a ratio of a variation indicator of a group of data to an average indicator of the data (a ratio of standard deviation to mean is referred to as coefficient of variation), and the coefficient of variation is a relative variation indicator. The mean refers to a mean of a group of thickness data, and also refers to a number obtained by dividing a sum of all data in a group of thickness data by the number of the data.

The standard deviation is a mean of distances by which a group of data deviates from the data mean, and is a square root of an average of the sum of squares of deviations from the mean, denoted by σ. The standard deviation is an arithmetic square root of a thickness variance. The standard deviation can reflect a discrete degree of a thickness data set.

To be specific, coefficient of variation CV of thickness of coating = sample thickness standard deviation σ / sample thickness mean value.

It should be noted that the data used for the calculation of coefficient of variation are the thickness of the coating 236 on any surface of a substrate at the same turn. The above substrate may be a positive electrode sheet, a negative electrode sheet, or a separator. It can be understood that when both the two surfaces of the substrate at the same turn have coatings, the coefficients of variation of the thicknesses of the coatings on the two surfaces are calculated separately.

The use of the solution provided in these embodiments allows for a small thickness fluctuation of the coating 236 at the same turn, so that a position of the tab 23a after winding is close to a designed position, thereby reducing the risk of misalignment of the tab 23a to some extent.

In some embodiments, at the same turn, the coefficient of variation of the thickness of the coating 236 is less than or equal to 10%.

The use of the solution provided in these embodiments allows for a small thickness fluctuation of the coating 236 at the same turn, so that the position of the tab 23a after winding is close to the designed position, thereby reducing the risk of misalignment of the tab 23a to some extent.

In some embodiments, from an inner turn to an outer turn, the thickness of the coating gradually increases, and a thickness change rate is less than or equal to 10%.

The thickness change rate reflects a thickness change situation of the coatings in different turn layers.$Thickness change rate = change in thickness / original thickness * 100 % .$

Assuming that along the stacking direction of the battery cell from inside to outside, a thickness of the first coating 236 is d1, a thickness of the second coating 236 is d2, a thickness of the third coating 236 is d3, and a thickness of the fourth coating 236 is d4, d4 > d3 > d2 > d1. Therefore, a thickness change rate of the second coating 236 refers to (d2 - d1) / d1, a thickness change rate of the third coating 236 refers to (d3 - d2) / d2, and a thickness change rate of the fourth coating 236 refers to (d4 - d3) / d3.

By adopting the solution provided in these embodiments, the spacing between the positive electrode sheet 231 and the negative electrode sheet 232 may be sequentially increased from inside to outside along the stacking direction of the battery cell, enabling the outer turn layer to withstand a large swelling force, thereby allowing for a small risk of breakage in each turn layer of the electrode sheet. The thickness change rate within the range provided in these embodiments can not only allow for a small risk of breakage in each turn layer of the electrode sheet but also reduce, to some extent, the impact on the energy density of the battery 100 caused by excessive thickness of the coating 236.

In some embodiments, from an inner turn to an outer turn, the thickness of the coating gradually increases, and the thickness change rate is less than or equal to 5%.

The thickness change rate within the range provided in these embodiments can not only allow for a small risk of breakage in each turn layer of the electrode sheet, but also reduce, to some extent, the impact on the energy density of the battery 100 caused by excessive thickness of the coating 236.

In some embodiments, on at least one surface of at least one curved portion 235, a coverage rate of the coating 236 is less than or equal to 60%, where the coverage rate is a percentage of an area sum of coating points of the coating 236 in the same surface to a total area of a distribution region of the coating 236.

The coating 236 is a discontinuous structure, that is, the coating 236 has many coating points, so that a gap is present between adjacent coating points. The coating point refers to a continuous structure formed by a material of the coating falling on the curved portion 235, and the continuous structure may be a dotted structure, a strip structure, or the like. The area sum of the above coating points is a sum of coverage areas of all coating points in the coating 236. The coverage area is an area covering the surface of the curved portion 235. The total area of the distribution region refers to an area of a closed figure enclosed by an outer contour of the coating 236.

By adopting the solution provided in these embodiments, the lithium ion transport performance of the surface where the discontinuously distributed coating 236 in the battery cell is located can meet the requirements, so that the dynamic performance of the battery cell meets the use requirements.

In some embodiments, on at least one surface of at least one curved portion 235, the coverage rate of the coating 236 is less than or equal to 30%. The coverage rate is a percentage of an area sum of coating points of the coating to a total area of a distribution region of the coating.

By adopting the solution provided in these embodiments, the coating 236 can cover only a small portion of the corresponding curved portion 235, so that the lithium ion transport performance of the surface where the discontinuously distributed coating 236 in the battery cell is located meets the requirements, so that the dynamic performance of the battery cell meets the use requirements.

In some embodiments, on at least one surface of at least one curved portion 235, the coating 236 is arranged in an array or arranged irregularly.

The array arrangement may be one-dimensional array arrangement or two-dimensional array arrangement, which may be determined according to use requirements.

Irregular arrangement means that each part in the coating 236 is arranged irregularly.

The array arrangement of the coating 236 on at least one surface of at least one curved portion 235 facilitates design. The irregular arrangement of the coating 236 on at least one surface of at least one curved portion 235 facilitates preparation.

In some embodiments, the coating 236 includes separate bodies 236a distributed at intervals, and the separate body 236a has one or more of a regular linear shape, an irregular linear shape, a regular dotted shape, and an irregular dotted shape.

The use of the solution provided in these embodiments allows for a small size of a single separate body 236a and a small coverage region, so that the adverse impact on the performance of the battery cell is small.

In some embodiments, when the separate body 236a has a regular linear shape or an irregular linear shape, a width of the separate body 236a is less than or equal to 2 mm, and a line length is not limited.

The use of the solution provided in these embodiments allows for a small size of a single separate body 236a and a small coverage region, so that the adverse impact on the performance of the battery cell is small.

In some other embodiments, when the separate body 236a has a regular dotted shape or an irregular dotted shape, a maximum size of the separate body 236a is greater than 0 mm and less than or equal to 2 mm.

The use of the solution provided in these embodiments allows for a small size of a single separate body 236a and a small coverage region, so that the adverse impact on the performance of the battery cell is small.

In some embodiments, a spacing between outer contours of adjacent separate bodies 236a is 0.01 mm to 5 mm.

The spacing between the outer contours of two adjacent separate bodies 236a may be the same or different at different positions. The spacing between the outer contours of adjacent separate bodies 236a within the range provided in these embodiments makes the spacing between two adjacent separate bodies 236a greater than the size of a single separate body 236a, allowing for a small coverage rate of the coating 236, so that the lithium ion transport performance of the surface where the discontinuously distributed coating 236 in the battery cell is located meets the requirements, and thus the dynamic performance of the battery cell meets the use requirements.

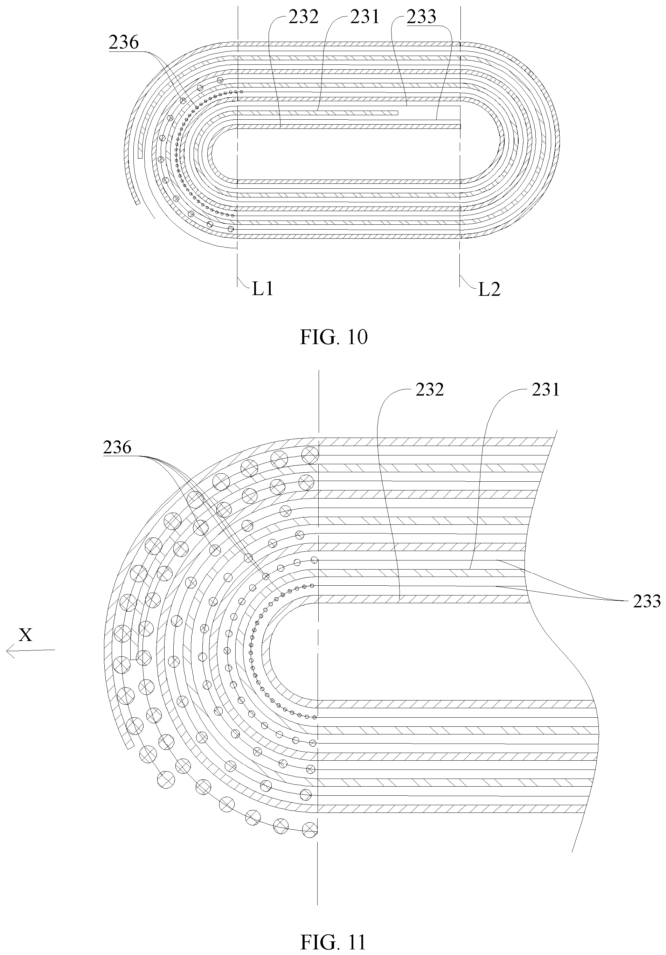

As shown in FIG. 10, in some embodiments, along the stacking direction of the battery cell, a plurality of coatings 236 are provided, and the thicknesses of all coatings 236 gradually increase from inside to outside. That is, along a direction X in FIG. 11, the thicknesses of all coatings 236 gradually increase from inside to outside.

The thicknesses of all coatings 236 gradually increasing from inside to outside means that the thickness of the coating 236 located on an outer side is greater than the thickness of the coating 236 located on an inner side. It can be understood that the above inner side and outer side are relative. For example, the innermost turn in the battery cell is regarded as the first turn, and along the stacking direction of the battery cell from inside to outside, the turns are sequentially recorded as the first turn, the second turn, the third turn, ..., and the n-th turn, where the fourth turn is an outer turn layer relative to the third turn, the second turn, and the first turn, but is an inner turn layer relative to the fifth turn and the turns outside the fifth turn.

Since the swelling force received by an outer turn layer is greater than that received by an inner turn layer, the use of the solution provided in these embodiments allows the spacing between the positive electrode sheet 231 and the negative electrode sheet 232 to be sequentially increased from inside to outside along the stacking direction of the battery cell, enabling the outer turn layer to withstand a large swelling force, thereby allowing for a small risk of breakage in each turn layer of the electrode sheet.

In some embodiments, at least one surface of each curved portion 235 in the positive electrode sheet 231 is provided with the coating 236; and/or
at least one surface of each curved portion 235 in the negative electrode sheet 232 is provided with the coating 236; and/or
as shown in FIG. 11, at least one surface of each curved portion 235 in the separator 233 is provided with the coating 236.

The solution provided in these embodiments includes the following cases: first, at least one surface of each curved portion 235 in the positive electrode sheet 231 is provided with the coating 236; second, at least one surface of each curved portion 235 in the negative electrode sheet 232 is provided with the coating 236; third, at least one surface of each curved portion 235 in the separator 233 is provided with the coating 236; fourth, at least one surface of each curved portion 235 in the positive electrode sheet 231 is provided with the coating 236, and at least one surface of each curved portion 235 in the negative electrode sheet 232 is provided with the coating 236; fifth, at least one surface of each curved portion 235 in the positive electrode sheet 231 is provided with the coating 236, and at least one surface of each curved portion 235 in the separator 233 is provided with the coating 236; sixth, at least one surface of each curved portion 235 in the negative electrode sheet 232 is provided with the coating 236, and at least one surface of each curved portion 235 in the separator 233 is provided with the coating 236; and seventh, at least one surface of each curved portion 235 in the positive electrode sheet 231 is provided with the coating 236, at least one surface of each curved portion 235 in the negative electrode sheet 232 is provided with the coating 236, and at least one surface of each curved portion 235 in the separator 233 is provided with the coating 236.

The battery cell is a wound body, the wound body is a multi-turn structure, each turn has curved portions 235, and there are risks such as large stress and electrode sheet breakage. Therefore, by adopting the solution provided in these embodiments, the spacing between the positive electrode sheet 231 and the negative electrode sheet 232 at any corner can be increased, thereby reducing the risk of problems such as electrode sheet breakage at each corner.

In some embodiments, a thickness compression rate of the coating 236 under a first compression condition is less than or equal to 30%, where the first compression condition includes a pressure value of 0.15 Mpa to 0.25 Mpa and a compression duration of 100s to 140s.

The thickness compression rate refers to a ratio of a reduced thickness of the coating 236 after compression to a thickness before compression. For example, if the thickness of the coating 236 before compression is d₀ and the thickness after compression is d_{compressed}, the thickness compression rate is (d₀-d_{compressed})/d₀.

The first compression condition is substantially the same as a compression condition for the coating 236 during a winding process. By adopting the solution provided in these embodiments, the coating 236 is not excessively compressed after the battery cell is wound and formed, and can retain a large thickness, thereby providing good isolation between the positive electrode sheet 231 and the negative electrode sheet 232 in the corresponding region, meeting the use requirements.

In some embodiments, the first compression condition includes a pressure value of 0.2 Mpa and a compression duration of 120s.

The first compression condition adopting the values provided in these embodiments facilitates design and is similar to the compression condition for the coating 236 during the winding process, allowing for a good winding effect after coating preparation.

In some embodiments, a thickness compression rate of the coating 236 under a second compression condition is greater than or equal to 60%, where the second compression condition includes a pressure value of 2.5 Mpa to 3.5 Mpa and a compression duration of 100s to 140s.

The second compression condition is substantially the same as a squeezing condition for the swelling force received by the coating 236 when the battery cell is in use. By adopting the solution provided in these embodiments, the coating 236 can be compressed to a large extent after receiving the swelling force, so that a large space is released to reduce the stress on the electrode sheet, thereby reducing the risk of problems such as electrode sheet breakage.

In some embodiments, the second compression condition includes a pressure value of 3 Mpa and a compression duration of 120s.

The second compression condition adopting the values provided in these embodiments facilitates design and is similar to the compression condition for the coating 236 during use, reducing the risk of problems such as electrode sheet breakage to some extent.

In some embodiments, the coating 236 includes a polymer.

The polymer is a forming material of the coating 236. The coating 236 adopting a polymer has a stable structure and facilitates preparation.

In some embodiments, the coating 236 includes at least one of polytetrafluoroethylene, polyvinyl alcohol, polyvinyl acetate, polyacrylamide, phenolic resin, epoxy resin, polyurethane, polyvinylpyrrolidone, polyethylene oxide, poly(vinylidene fluoride), polyacrylonitrile, polyimide, polyacrylate, polydimethylsiloxane, polystyrene, polyethylene, polypropylene, polyacrylate salt, polyacrylic acid, polybutadiene, carboxymethylcellulose sodium, and derivatives thereof.

Specifically, the coating 236 includes at least one of polytetrafluoroethylene, polyvinyl alcohol, polyvinyl acetate, polyacrylamide, phenolic resin, epoxy resin, polyurethane, polyvinylpyrrolidone, polyethylene oxide, poly(vinylidene fluoride), polyacrylonitrile, polyimide, polyacrylate, polydimethylsiloxane, polystyrene, polyethylene, polypropylene, polyacrylate salt, polyacrylic acid, polybutadiene, carboxymethylcellulose sodium (CMC), and the like, as well as blends, copolymers, and surface-modified polymers derived from the modification of the aforementioned polymers.

The material of the coating 236 has a stable structure and facilitates material selection and preparation.

In some embodiments, the coating 236 further includes a thickener.

The thickener is not particularly limited in these embodiments, as long as the purposes of the invention of the present application can be achieved, for example, it may be carboxymethylcellulose sodium.

The thickener is used to increase the stability of a slurry for preparing the coating 236, so as to prevent slurry sedimentation.

In some embodiments, the thickener includes carboxymethylcellulose sodium.

Carboxymethylcellulose sodium (also known as: carboxymethylcellulose sodium salt, carboxymethyl cellulose, CMC, Carboxymethyl, Cellulose Sodium, Sodium salt of Carboxy Methyl Cellulose) is the most widely used type of cellulose in the world today, with the largest use amount and excellent thickening effect. By adopting the solution provided in these embodiments, the slurry for the coating 236 can have good viscosity and rheological properties.

In some embodiments, the coating 236 further includes an auxiliary binder.

The auxiliary binder plays a role in auxiliary binding to further improve the binding performance of the discontinuously distributed coating 236. The auxiliary binder is not particularly limited in the present application, as long as the purposes of the present application can be achieved.

In some embodiments, the auxiliary binder includes at least one of homopolymers or copolymers of ethyl acrylate, butyl acrylate, ethyl methacrylate, styrene, chlorostyrene, fluorostyrene, methylstyrene, acrylic acid, methacrylic acid, maleic acid, acrylonitrile, or butadiene.

The auxiliary binder made of the material provided in these embodiments has a stable structure and good binding effect.

In some embodiments, the coating 236 further includes a wetting agent.

The wetting agent is used to reduce the surface energy of the slurry and enhance the affinity between the slurry and a substrate. The wetting agent is not particularly limited in the present application, as long as the purposes of the present application can be achieved.

In some embodiments, the wetting agent includes at least one of dimethylsiloxane, polyethylene oxide, oxyethylene alkyl phenol ether, polyoxyethylene fatty alcohol ether, polyoxyethylene polyoxypropylene block copolymer, or sodium dioctyl sulfosuccinate.

The wetting agent made of the material provided in these embodiments has a stable structure and good wetting effect.

In the above embodiments, there are no special requirements for a preparation method of the coating 236. For example, at least one of micro-gravure coating, gravure coating, spraying, extrusion coating, dispensing coating, 3D printing, and the like may be selected.

According to some embodiments of the present application, the present application further provides a battery, including the battery cell of any of the above solutions.

The battery provided in these embodiments of the present application includes the battery cell of any of the above solutions, where the spacing between the positive electrode sheet and the negative electrode sheet in at least one corner is increased, so that a required space is provided for the swelling of the negative electrode sheet and the positive electrode sheet at the corner. This can reduce the stress of the battery cell at the corner to some extent, reducing the risk of adverse conditions such as electrolyte deficiency, electrode sheet breakage, deformation, wrinkling, black spots, and lithium precipitation of the battery cell at the corner to some extent, thereby prolonging the service life of the battery cell to some extent.

According to some embodiments of the present application, the present application further provides an electric apparatus, including the battery of any of the above solutions, and the battery is configured to provide electrical energy for the electric apparatus.

The electric apparatus can be any of the aforementioned devices or systems using batteries.

The electric apparatus provided in these embodiments of the present application includes the battery of any of the above solutions, where the spacing between the positive electrode sheet and the negative electrode sheet in at least one corner is increased, so that a required space is provided for the swelling of the negative electrode sheet and the positive electrode sheet at the corner. This can reduce the stress of the battery cell at the corner to some extent, reducing the risk of adverse conditions such as electrolyte deficiency, electrode sheet breakage, deformation, wrinkling, black spots, and lithium precipitation of the battery cell at the corner to some extent, thereby prolonging the service life of the battery cell to some extent.

According to some embodiments of the present application, a battery cell is provided. As shown in FIG. 4 to FIG. 11, the battery cell includes a positive electrode sheet 231, a negative electrode sheet 232, and a separator 233. The positive electrode sheet 231, the negative electrode sheet 232, and the separator 233 are stacked in a preset order and wound to form a wound body. The positive electrode sheet 231, the negative electrode sheet 232, and the separator 233 respectively include a plurality of flat portions 234 and a plurality of curved portions 235 alternately connected.

At least one surface of all curved portions 235 of at least one of the positive electrode sheet 231, the negative electrode sheet 232, and the separator 233 is coated with a discontinuously distributed coating 236.

A thickness of the coating 236 is 5 µm to 100 µm. Preferably, the thickness of the coating 236 is 20 µm to 50 µm.

From an inner turn to an outer turn, the thickness of the coating 236 gradually increases, and a thickness change rate is less than or equal to 10%.

On at least one surface of at least one curved portion, a coverage rate of the coating 236 is less than or equal to 60%, where the coverage rate is a percentage of an area sum of coating points of the coating 236 to a total area of a distribution region of the coating 236. The coating 236 includes separate bodies 236a distributed at intervals, where the separate body 236a has one or more of a regular linear shape, an irregular linear shape, a regular dotted shape, and an irregular dotted shape.

When the separate body 236a has a regular linear shape or an irregular linear shape, a width of the separate body 236a is less than or equal to 2 mm.

When the separate body 236a has a regular dotted shape or an irregular dotted shape, a maximum size of the separate body 236a is greater than 0 mm and less than or equal to 2 mm. A spacing between outer contours of adjacent separate bodies 236a is 0.01 mm to 5 mm.

Along the stacking direction of the battery cell, the thicknesses of all coatings 236 gradually increase from inside to outside.

Except for the coating 236 located at the innermost turn, a thickness change rate of any coating 236 is greater than or equal to 0. Preferably, the thickness change rate is 0% to 10%.

A thickness compression rate of the coating 236 under a first compression condition is less than or equal to 30%, where the first compression condition includes a pressure value of 0.2 Mpa and a compression duration of 120s. A thickness compression rate of the coating 236 under a second compression condition is greater than or equal to 60%, where the second compression condition includes a pressure value of 3 Mpa and a compression duration of 120s.

The coating 236 includes a polymer, a thickener, an auxiliary binder, and a wetting agent.

The polymer includes at least one of polytetrafluoroethylene, polyvinyl alcohol, polyvinyl acetate, polyacrylamide, phenolic resin, epoxy resin, polyurethane, polyvinylpyrrolidone, polyethylene oxide, poly(vinylidene fluoride), polyacrylonitrile, polyimide, polyacrylate, polydimethylsiloxane, polystyrene, polyethylene, polypropylene, polyacrylate salt, polyacrylic acid, polybutadiene, carboxymethylcellulose sodium, and derivatives thereof. The thickener is carboxymethylcellulose sodium.

A monomer of the auxiliary binder includes at least one of ethyl acrylate, butyl acrylate, ethyl methacrylate, styrene, chlorostyrene, fluorostyrene, methylstyrene, acrylic acid, methacrylic acid, maleic acid, acrylonitrile, and butadiene.

The wetting agent includes at least one of dimethylsiloxane, polyethylene oxide, oxyethylene alkyl phenol ether, polyoxyethylene fatty alcohol ether, polyoxyethylene polyoxypropylene block copolymer, and sodium dioctyl sulfosuccinate.

### Examples

The following further illustrates the embodiments of the present application by using examples in which a battery cell is prepared by coating an electrode plate in a corner region of the battery cell with a PVDF (Poly(vinylidene fluoride), Poly(vinylidene fluoride)) coating in regular dot array distribution.

It can be understood that the examples described below are exemplary and are only used to explain the present application, and cannot be understood as limiting the present application. The experimental methods used in the following examples are conventional methods unless otherwise specified; and the reagents, materials, instruments, and the like used in the following examples, with no manufacturers indicated, are all conventional products that can be obtained through purchase. In the examples where specific technologies or conditions are not indicated, the procedures shall be carried out in accordance with the technologies or conditions described in the literature within the art or in accordance with the product specifications.

In the examples, a battery cell and a battery cell were provided. The battery cell included a positive electrode sheet, a negative electrode sheet, a separator, and an electrolyte. The PVDF coating in regular dot array distribution on the surface of the electrode sheet in a corner region of the battery cell was the discontinuously distributed coating described in the present application, where a dot diameter of the PVDF coating was 0.5 µm, distances from the center of the dot to front, rear, left, and right were all 1 µm, and a thickness change rate from layer to layer of the coating was 0%. The battery cells of Comparative Examples 1 to 4 and Examples 1 to 10 were all prepared according to the following preparation methods, where the only difference was that specification parameters of the discontinuously distributed coatings were different, and the specific difference is shown in Table 1.

### Preparation of separator:

In the examples of the present application, the material of the substrate of the separator was not particularly limited. The substrate of the present application included but was not limited to at least one of polyethylene, polypropylene, polyethylene terephthalate, polyimide, or aramid. For example, polyethylene included at least one composition selected from high-density polyethylene, low-density polyethylene, and ultrahigh-molecular-weight polyethylene. Especially, polyethylene and polypropylene have good effects in preventing short circuits and can improve the stability of the battery cell through the shutdown effect. The surface of the substrate could be coated with a heat-resistant coating to improve the heat resistance of the separator, where there are no special requirements for the heat-resistant coating. For example, common ceramic coatings might be used. The surface of the substrate could be coated with a binding coating to enhance an interface binding force between the separator and the electrode sheet, and there are no special requirements for the binding coating, for example, common PVDF coatings may be used.

### Preparation of positive electrode sheet:

A positive electrode active material, conductive carbon black SP, and a binder PVDF (poly(vinylidene fluoride)) were dispersed into a solvent NMP (N-methylpyrrolidone) and mixed uniformly to obtain a positive electrode slurry; and the positive electrode slurry was uniformly applied onto a positive electrode current collector aluminum foil, dried at 85°C, subjected to cold pressing, edge cutting, sheet cutting, and slitting, and then dried for 4 h under a vacuum condition at 85°C to obtain a positive electrode sheet. A mass ratio of the positive electrode active material, the conductive carbon black, and the binder PVDF was 96:2:2, and a solid content of the obtained positive electrode slurry was 75%. In the examples, lithium nickel cobalt manganese oxide 811 was used as the positive electrode active material.

### Preparation of discontinuously distributed coating:

PVDF powder, an auxiliary binder polyacrylate, and a thickener CMC at a mass ratio of 95/3/2 were added into a stirrer, stirred, and mixed uniformly in deionized water to obtain a slurry with a solid content of 25%; then, a wetting agent polyoxyethylene fatty alcohol ether accounting for 0.1% of a total mass of the slurry was added to obtain a slurry; and a dispensing device was used to prepare discontinuously distributed coatings on two sides of the positive electrode sheet in a corner region of the battery cell.

### Preparation of negative electrode sheet:

A negative electrode active material artificial graphite, a conductive agent acetylene black, a binder styrene-butadiene rubber (Styrene, 1,3-butadiene polymer, SBR), and a thickener carboxymethylcellulose sodium (Carboxymethylcellulose sodium, CMC) at a weight ratio of 96:1:2:1 were mixed, added with a solvent deionized water, stirred, and mixed uniformly to obtain a negative electrode slurry with a solid content of 70%. The negative electrode slurry was uniformly applied onto a negative electrode current collector copper foil, dried at 80°C to 90°C after coating, subjected to cold pressing, edge cutting, sheet cutting, and slitting, and then dried for 4 h under a vacuum condition at 110°C to obtain a negative electrode sheet.

### Preparation of electrolyte:

An electrolyte was prepared, which included dimethyl carbonate (dimethyl carbonate, DMC), ethyl methyl carbonate (Ethyl Methyl Carbonate, EMC), and ethylene carbonate (Ethylene carbonate, EC) at a mass ratio of 5:2:3. Then, an electrolytic salt was added to ensure that a concentration of lithium hexafluorophosphate in the electrolyte was 1 mol/L.

### Preparation of battery cell:

The negative electrode sheet, the separator, and the positive electrode sheet were sequentially stacked, with the separator located between the positive electrode sheet and the negative electrode sheet, and then wound to form a square bare battery cell. An adapter sheet was welded to the bare battery cell, a top cover was welded, and the battery cell was wrapped by an insulating film and then encapsulated into an aluminum shell, followed by baking at 105°C for 12 h. The electrolyte was injected, followed by standing, forming, secondary electrolyte injection, sealing nail welding, helium seal detection, and aging treatment, to complete the preparation of the battery cell.

### Test methods and devices were as follows:

Test of thickness and coefficient of variation of discontinuously distributed coating:

Coated substrate thickness test: At room temperature, a coated substrate was taken and cut into 50 µm wide strips along a TD direction (transverse direction, transverse direction); in 6 parallel samples, ten uniform data points were tested using a micrometer thickness gauge (Mitutoyo Litematic VL-50B, with a test head diameter of 5 µm and a test pressure of 0.01 N) along a central position in the TD direction; and after the 6 parallel samples were tested, an average h1 of 60 test data was taken as the thickness of the substrate.

Total thickness test of separator coated with coating:

Test was performed according to a substrate thickness test method. First, the thickness of the substrate was measured, recorded as h1; then, a surface of the substrate was coated with a coating; and a total thickness of the separator coated with the coating was recorded as h2.

Calculation of thickness h of discontinuously distributed coating: h = h2 - h1. There were a total of 60 thickness values, and a mean H and a standard deviation σ of the coating could be obtained through calculation.

Calculation of second coefficient of variation CV:$CV = σ / H ;$ where H is an average of the above 60 thickness values, σ is a standard deviation of the above 60 thickness values, and CV is a coefficient of variation of the above 60 thickness values.

### Coverage rate test of coating:

A Keyence Vhx5000 tester was used and a coverage rate test mode was selected to test the coverage rate of the coating on the substrate. When the coverage rate of the coating was tested and determined, a minimum area of a determined region of the substrate needed to be greater than or equal to 5 µm*6 µm.

### Battery cell capacity test:

In a 25°C thermostat, the battery cell was charged at a constant current at a rate of 1C to a voltage of 4.2 V, then charged at a constant voltage of 4.2 V to a current of 0.05C, and then discharged at a constant current at a rate of 1C to a voltage of 2.8 V, and the obtained discharge capacity was the capacity of the battery.

### Room-temperature cycling performance test of battery cell:

At 25°C, the battery cell was charged at a constant current at a rate of 0.7C to a voltage of 4.2 V, then charged at a constant voltage of 4.2 V to a current of 0.05C, and then discharged at a constant current at a rate of 1C to a voltage of 2.8 V; this was one charge-discharge cycling process; and this charge-discharge cycling process was repeated according to a required number of cycles. 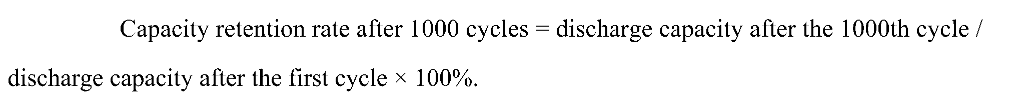 Capacity retention rate after 1000 cycles = discharge capacity after the 1000th cycle / discharge capacity after the first cycle × 100%.

### Battery cell disassembly test:

A battery cell that had completed the required number of cycle tests was fully charged and taken down, disassembled in a battery cell disassembly drying room; and an interface between the separator and the electrode sheet was opened to check crack situation of the corner and interface black spot lithium precipitation situation of the battery cell.

### Wound tab misalignment test of battery cell:

After a multi-tab battery cell was wound, a distance from the right root of the first positive electrode tab to the right root of the last positive electrode tab was tested, which was a tab misalignment distance.

According to Table 1, from Examples 1 to 5 and Comparative Examples 1 to 2, it can be seen that the thickness of the coating should be controlled in an appropriate range. If the thickness is too large, the corner spacing of the battery cell is too large, leading to interface lithium precipitation; and if the thickness is too small, the corner spacing of the battery cell is insufficient, causing crack due to accumulated swelling stress of the electrode sheet during cycling.

From Examples 3, 6, and 7 and Comparative Example 3, it can be seen that the coefficient of variation of the coating cannot be too large. If the coefficient of variation is too large, the tab misalignment of the battery cell exceeds the standard, causing a failure in subsequent normal processing of the battery cell.

From Examples 3, 8, 9, and 10 and Comparative Example 4, it can be seen that the coverage rate of the coating cannot be too high. If the coverage rate of the coating is too high, ion channels at the interface of the battery cell decrease, and the dynamic performance of the interface deteriorates, causing interface black spot lithium precipitation problems.

**Table 1**

| | Mean of coatings of entire battery cell | Coefficient of variation at the same turn (that is, second coefficient of variation) | Coverage rate of coating | Battery cell capacity (Ah) | Capacity retention rate after 1000 cycles | Probability of electrode sheet cracking caused by corner stress after 1000 cycles | Probability of interface lithium precipitation caused by excessive corner gap after 10 cycles | Probability of tab misalignment exceeding standard in battery cell | Probability of interface black spot lithium precipitation after 50 cycles |
|---|---|---|---|---|---|---|---|---|---|
| Example 1 | 5 | 10% | 30% | 118.0 | 79.7% | 1% | None | None | None |
| Example 2 | 20 | 10% | 30% | 118.8 | 82.1% | None | None | None | None |
| Example 3 | 35 | 10% | 30% | 118.8 | 84.5% | None | None | None | None |
| Example 4 | 50 | 10% | 30% | 118.0 | 83.1% | None | None | None | None |
| Example 5 | 100 | 10% | 30% | 117.6 | 78.7% | None | 1% | None | None |
| Example 6 | 35 | 5% | 30% | 117.4 | 85.5% | None | None | None | None |
| Example 7 | 35 | 15% | 30% | 117.6 | 83.2% | None | None | 1% | None |
| Example 8 | 35 | 10% | 20% | 118.8 | 85.4% | None | None | None | None |
| Example 9 | 35 | 10% | 40% | 117.4 | 83.2% | None | None | None | None |
| Example 10 | 35 | 10% | 60% | 118.4 | 80.1% | None | None | None | 1% |
| Comparative Example 1 | 3 | 10% | 30% | 118.6 | 72.5% | 10% | None | None | None |
| Comparative Example 2 | 120 | 10% | 30% | 118.6 | 71.7% | None | 15% | None | None |
| Comparative Example 3 | 35 | 20% | 30% | 117.4 | 80.2% | None | None | 20% | None |
| Comparative Example 4 | 35 | 10% | 70% | 117.1 | 69.8% | None | None | None | 15% |

In conclusion, a discontinuously distributed coating is distributed on at least a part of the surface of the positive electrode and/or the negative electrode and/or the separator at a corner portion of the wound battery cell described in the present application, the mean of the discontinuously distributed coatings in the entire battery cell ranges from 5 µm to 100 µm, and the coefficient of variation of the coating at the same turn layer of the battery cell is less than or equal to 15%. The discontinuously distributed coating can meet the requirements for reserving space at the corner of the battery cell, to provide a required space for the swelling of the electrode sheet, thereby avoiding adverse conditions such as electrode sheet breakage, deformation, wrinkling, black spots, and lithium precipitation in the battery cell. A small thickness fluctuation of the coating at the same turn layer can avoid the problem of tab misalignment in the battery cell. The coating has good ionic conductivity, which can prevent interface black spot lithium precipitation problems in the battery cell.

Ultimately, it should be noted that: the above embodiments are only used to illustrate the technical solutions of the present application rather than to limit them. Although the present application has been described in detail with reference to the foregoing embodiments, those of ordinary skill in the art should understand that: they can still modify the technical solutions recorded in the foregoing embodiments, or equivalently replace some or all of the technical features. These modifications or replacements do not make the essence of the corresponding technical solutions depart from the scope of the technical solutions of the embodiments of the present application, and they should all be covered in the scope of the claims and specification of the present application. In particular, as long as there is no structural conflict, the technical features mentioned in the various embodiments can be combined in any way. The present application is not limited to the specific embodiments disclosed herein, but includes all technical solutions falling within the scope of the claims.

## Claims

1. A battery cell, **characterized by** comprising a positive electrode sheet, a negative electrode sheet, and a separator, wherein the positive electrode sheet, the negative electrode sheet, and the separator are stacked in a preset order and wound to form a wound body, and the positive electrode sheet, the negative electrode sheet, and the separator respectively comprise a plurality of flat portions and a plurality of curved portions alternately connected; and
at least one surface of at least one of the curved portions is coated with a discontinuously distributed coating.

2. The battery cell according to claim 1, **characterized in that** a thickness of the coating is 5 µm to 100 µm.

3. The battery cell according to claim 2, **characterized in that** the thickness of the coating is 20 µm to 50 µm.

4. The battery cell according to any one of claims 1 to 3, **characterized in that** two of the curved portions located at the same turn are each provided with the coating.

5. The battery cell according to any one of claims 1 to 4, **characterized in that** at the same turn, a coefficient of variation of the thickness of the coating is less than or equal to 15%.

6. The battery cell according to any one of claims 1 to 5, **characterized in that** at the same turn, a coefficient of variation of the thickness of the coating is less than or equal to 10%.

7. The battery cell according to any one of claims 1 to 6, **characterized in that** from an inner turn to an outer turn, a thickness of the coating gradually increases, and a thickness change rate is less than or equal to 10%.

8. The battery cell according to any one of claims 1 to 7, **characterized in that** from the inner turn to the outer turn, a thickness of the coating gradually increases, and a thickness change rate is less than or equal to 5%.

9. The battery cell according to any one of claims 1 to 8, **characterized in that** on at least one surface of at least one of the curved portions, a coverage rate of the coating is less than or equal to 60%, wherein the coverage rate is a percentage of an area sum of coating points of the coating to a total area of a distribution region of the coating.

10. The battery cell according to any one of claims 1 to 9, **characterized in that** on at least one surface of at least one of the curved portions, a coverage rate of the coating is less than or equal to 30%, wherein the coverage rate is a percentage of an area sum of coating points of the coating to a total area of a distribution region of the coating.

11. The battery cell according to any one of claims 1 to 10, **characterized in that** on at least one surface of at least one of the curved portions, the coating is arranged in an array or arranged irregularly.

12. The battery cell according to any one of claims 1 to 11, **characterized in that** the coating comprises separate bodies distributed at intervals, wherein the separate body has one or more of a regular linear shape, an irregular linear shape, a regular dotted shape, and an irregular dotted shape.

13. The battery cell according to claim 12, **characterized in that** when the separate body has a regular linear shape or an irregular linear shape, a width of the separate body is less than or equal to 2 mm.

14. The battery cell according to claim 12, **characterized in that** when the separate body has a regular dotted shape or an irregular dotted shape, a maximum size of the separate body is greater than 0 mm and less than or equal to 2 mm.

15. The battery cell according to any one of claims 12 to 14, **characterized in that** a spacing between outer contours of adjacent separate bodies is 0.01 mm to 5 mm.

16. The battery cell according to any one of claims 1 to 15, **characterized in that** at least one surface of each of the curved portions in the positive electrode sheet is provided with the coating; and/or
at least one surface of each of the curved portions in the negative electrode sheet is provided with the coating; and/or
at least one surface of each of the curved portions in the separator is provided with the coating.

17. The battery cell according to any one of claims 1 to 16, **characterized in that** a thickness compression rate of the coating under a first compression condition is less than or equal to 30%, wherein the first compression condition comprises a pressure value of 0.15 Mpa to 0.25 Mpa and a compression duration of 100s to 140s.

18. The battery cell according to claim 17, **characterized in that** the first compression condition comprises a pressure value of 0.2 Mpa and a compression duration of 120s.

19. The battery cell according to any one of claims 1 to 18, **characterized in that** a thickness compression rate of the coating under a second compression condition is greater than or equal to 60%, wherein the second compression condition comprises a pressure value of 2.5 Mpa to 3.5 Mpa and a compression duration of 100s to 140s.

20. The battery cell according to claim 19, **characterized in that** the second compression condition comprises a pressure value of 3 Mpa and a compression duration of 120s.

21. The battery cell according to any one of claims 1 to 20, **characterized in that** the coating comprises a polymer.

22. The battery cell according to claim 21, **characterized in that** the polymer comprises at least one of polytetrafluoroethylene, polyvinyl alcohol, polyvinyl acetate, polyacrylamide, phenolic resin, epoxy resin, polyurethane, polyvinylpyrrolidone, polyethylene oxide, poly(vinylidene fluoride), polyacrylonitrile, polyimide, polyacrylate, polydimethylsiloxane, polystyrene, polyethylene, polypropylene, polyacrylate salt, polyacrylic acid, polybutadiene, carboxymethylcellulose sodium, and derivatives thereof.

23. The battery cell according to claim 21 or 22, **characterized in that** the coating further comprises an auxiliary binder.

24. The battery cell according to claim 23, **characterized in that** a monomer of the auxiliary binder comprises at least one of ethyl acrylate, butyl acrylate, ethyl methacrylate, styrene, chlorostyrene, fluorostyrene, methylstyrene, acrylic acid, methacrylic acid, maleic acid, acrylonitrile, and butadiene.

25. The battery cell according to any one of claims 21 to 24, **characterized in that** the coating further comprises a wetting agent.

26. The battery cell according to claim 25, **characterized in that** the wetting agent comprises at least one of dimethylsiloxane, polyethylene oxide, oxyethylene alkyl phenol ether, polyoxyethylene fatty alcohol ether, polyoxyethylene polyoxypropylene block copolymer, and sodium dioctyl sulfosuccinate.

27. A battery, **characterized by** comprising the battery cell according to any one of claims 1 to 26.

28. An electric apparatus, **characterized by** comprising the battery according to claim 27.
